# EUROPEAN PATENT APPLICATION

(11) **EP 1 168 716 A2**
(43) Date of publication of application: **02.01.2002**
(21) Application number: 01114887.1
(22) Date of filing: 29.06.2001
(51) Int. Cl.: H04L 12/28, H04L 12/56

(54) **Apparatus and system for radio communication, and stationary station**

(30) Priority: 30.06.2000 JP 2000200239
(71) Applicant: KABUSHIKI KAISHA TOSHIBA, Kawasaki-shi, Kanagawa-ken 210-8572 (JP)
(72) Inventor: Uehara, Keiji, Intellectual Property Division, Minato-ku, Tokyo 105-8001 (JP); Ito, Koichi, Intellectual Property Division, Minato-ku, Tokyo 105-8001 (JP)
(74) Representative: HOFFMANN - EITLE

(57) **Abstract**

In a mobile radio communication system, a base station (18) is provided for executing radio communication with a radio communication apparatus (14). The radio communication apparatus (14) includes a signal transmitting/receiving apparatus for mobile communication, which transmits and receives a signal to and from the base station (18). The apparatus (14) also includes a Bluetooth unit (15) for short-range radio data communication using relatively week radio waves. When the radio communication apparatus (14) is located at a distance communicable with a stationary station (16) based on the Bluetooth system, the radio communication apparatus (14) can acquire, from the stationary station (16), position information indicative of its position, and shop information related to the position information, etc. Thus, the short-range radio data communication system using week radio waves enables the mobile radio communication system for mobile phones to calculate the position of the user of the radio communication apparatus (14), and also to distribute information relevant to the position.

## Description

The present invention relates to a radio communication apparatus and a radio communication system, which can be also used in a short-range radio data communication system utilizing relatively week radio waves.

In mobile communication services using radio communication apparatuses, the cellular system is employed in order to enable as many people as possible to utilize radio frequencies that is a limited resource. In the case of the cellular system, its service area is divided into a large number of zones surrounding respective base stations. Each base station functions as a radio transmitting/receiving station for providing mobile communication services. Each station is connected by a wired line to an exchanger provided at a terminal of a telephone network, and acts as a kind of radio connection apparatus for connecting a plurality of apparatuses. Since the number of channels assigned to base stations is determined in case of accessing a base station, each of base stations executes multi-access control for assigning an unoccupied channel to each radio communication apparatus when a plurality of users of radio communication apparatuses have requested a connection to the base station. Further, each of the aforementioned zones is called a "cell", which corresponds to one service area surrounding one base station.

As one of cellular systems, there is the PHS (Personal Handy-phone System) that has a cell radius of approximately 100 m. In the PHS, a service is provided, which utilizes the fact that the cell radius is relatively small, to calculate where a PHS mobile radio communication apparatus (hereinafter referred to simply as a "PHS apparatus"). Thereby a base station transmits, to the PHS, position information relating to the position of the base station. There is another service which utilizes the position information. A base station informs a predetermined third person where a predetermined PHS apparatus is located at present. Moreover, a service is now being realized, which provides a user who owns a PHS apparatus with information on stores located in the neighborhood of the user, on the basis of the position information on the user.

In the PHS, the base stations are located at relatively short intervals of approximately 100 - 500 m, compared to the case of mobile phones. Accordingly, the position of each PHS apparatus can be calculated from the positions of a plurality of base stations and from the electric field intensity of radio waves transmitted from each base station, which is calculated from serves as a receiving level.

As a system for informing a user of position where the user is located, there is the GPS (Global Positioning System). The GPS utilizes an artificial satellite to designate the latitude and the longitude, i.e. the location, of the user.

The PHS can determine only the cell in which a user's apparatus is located. Accordingly, the user's location is determined only with an accuracy of a distance determined from the size of each cell of the PHS, substantially only with an accuracy of several hundred meters.

Also in the GPS, it is known that a position error of approximately several hundred meters always exists. Further, the GPS does not operate in a building or a tunnel, etc. in which communication with the artificial satellite is impossible.

In addition, in a mobile radio communication system for mobile phones, since the base stations are located, unlike the PHS, at wider intervals of, for example, approximately 1 km, it is difficult to accurately calculate a location of a mobile phone based on information of the position of base stations and the electric field intensities.

Recently, however, a system has been developed which enables transmission of radio data at a short range, using faint radio waves. This short-range radio data communication system is known as a short-range radio transmission technique capable of realizing data transmission between a mobile radio communication apparatus, a personal computer and other portable apparatuses. There is an interface called "Bluetooth" (hereinafter referred to simply as "BT"), which is used for enabling short-range radio data communication. The communicable range of apparatuses using the BT system is approximately 10 m. The apparatuses of this type can be connected to each other by a point-to-point connection corresponding to a connection of one point being connected to one point, or by a point-to-multipoint connection corresponding to a connection of one point being connected to a plurality of points. This BT system makes it possible to determine the position of a user having a radio apparatus.

Furthermore, in the near future, mobile phones will be able to execute high-speed data communication, and to mount a high-resolution color LCD. In accordance with this, it is expected that services will be demanded which provide interactive information such as neighborhood shop information, position information on the mobile phone and neighborhood map information, etc., using information on the positions of the mobile phones.

It is an object of the present invention to provide a radio communication apparatus, radio communication system and stationary station having the function of the short-range radio data communication system (such as the BT) using faint radio waves, and hence capable of calculating the location of the user of a mobile phone with high accuracy, utilizing a mobile radio communication system for mobile phones, and providing a service of informing the user of user's location.

It is another object of the present invention to provide a radio communication apparatus, radio communication system and stationary station capable of informing another apparatus as a destination, via a mobile radio communication system, of its position acquired using a short-range radio data communication system.

It is yet another object of the present invention to provide a radio communication apparatus, radio communication system and stationary station capable of informing another apparatus, serving as a destination, of the position of the radio communication apparatus and the time when the apparatus is located at the position.

It is a further object of the present invention to provide a radio communication apparatus, radio communication system and stationary station capable of restricting the supply of information in accordance with a setting mode in the apparatus when it has received a request for position information.

It is another object of the present invention to provide a radio communication apparatus, radio communication system and stationary station capable of restricting the supply of information in a predetermined time slot in accordance with a setting mode in the apparatus.

It is still a further object of the present invention to provide a radio communication apparatus, radio communication system and stationary station capable of restricting the supply of information for a predetermined telephone number in accordance with a setting mode in the apparatus.

According to a first aspect of the invention, there is provided a radio communication apparatus for executing radio communication with a base station of a mobile radio communication system, and capable of executing short-range radio data communication with a stationary station, the apparatus comprising:
communication means for executing short-range radio data communication with the stationary station; and
position information acquisition means for acquiring position information from the stationary station,
wherein the communication means acquires position information indicating a position of the radio communication apparatus by requesting the position information from the stationary station, using the position information acquisition means.

According to a second aspect of the invention, there is provided a stationary station for executing short-range radio data communication with a radio communication apparatus that can perform radio communication with a base station of a mobile radio communication system, the station comprising:
connection means for connecting the stationary station to the radio communication apparatus by radio;
memory means for storing information related to a position of the stationary station; and
transmission means for transmitting information stored in the memory means to the radio communication apparatus, over the radio connection by the connection means.

According to a third aspect of the invention, there is provided a radio communication system for a radio communication apparatus that executes radio communication with a base station, and can execute short-range radio data communication with a stationary station, the system comprising:
transmission means for acquiring position information on the radio communication apparatus from the stationary station, and transmitting the position information to the mobile radio communication system via the base station.

This summary of the invention does not necessarily describe all necessary features so that the invention may also be a sub-combination of these described features.

The invention can be more fully understood from the following detailed description when taken in conjunction with the accompanying drawings, in which:
FIG. 1 is a schematic view illustrating a radio communication apparatus and a BT stationary station according to a first embodiment of the invention;
FIG. 2 is a block diagram illustrating an internal electrical structure employed in the radio communication apparatus appearing in FIG. 1;
FIG. 3 is a block diagram illustrating the internal electrical structure of the BT stationary station shown in FIG. 1;
FIG. 4 is a flowchart useful in explaining the operation of the BT stationary station of FIG. 3 executed to activate a communication unit in the radio communication apparatus so as to transmit information concerning the neighborhood of the BT stationary station to the radio communication apparatus;
FIG. 5 is a flowchart useful in explaining an operation of the radio communication apparatus shown in FIG. 1 executed to request the reception of neighborhood information;
FIG. 6 is a schematic view illustrating a radio communication apparatus, a BT stationary station, a base station and a mobile radio communication system according to a second embodiment of the invention;
FIG. 7 is a flowchart useful in explaining the operation of the radio communication apparatus of the second embodiment executed to acquire updated neighborhood information;
FIG. 8 is a schematic view illustrating two radio communication apparatuses, a BT stationary station, two base stations and a mobile radio communication system according to a third embodiment of the invention;
FIG. 9 is a flowchart useful in explaining the operation of the radio communication apparatus of the third embodiment executed to acquire position information on another radio communication apparatus as a destination when the former apparatus has made a call to the latter apparatus through the mobile radio communication system;
FIG. 10 is a flowchart useful in explaining the operation of the radio communication apparatus shown in FIG. 7 executed to request position information;
FIG. 11 is a schematic view illustrating three radio communication apparatuses, two BT stationary stations, three base stations and a mobile radio communication system according to a fourth embodiment of the invention; and
FIG. 12 is a flowchart useful in explaining the operation of a radio communication apparatus according to a fifth embodiment executed to reject an information request issued by an unspecified radio communication apparatus.

Radio communication apparatuses, radio communication systems and stationary stations according to the embodiments of the present invention will be described with reference to the accompanying drawings. The radio communication apparatuses, radio communication systems and stationary stations of the embodiments employ the BT (Bluetooth) radio system as its short-range radio data communication system.

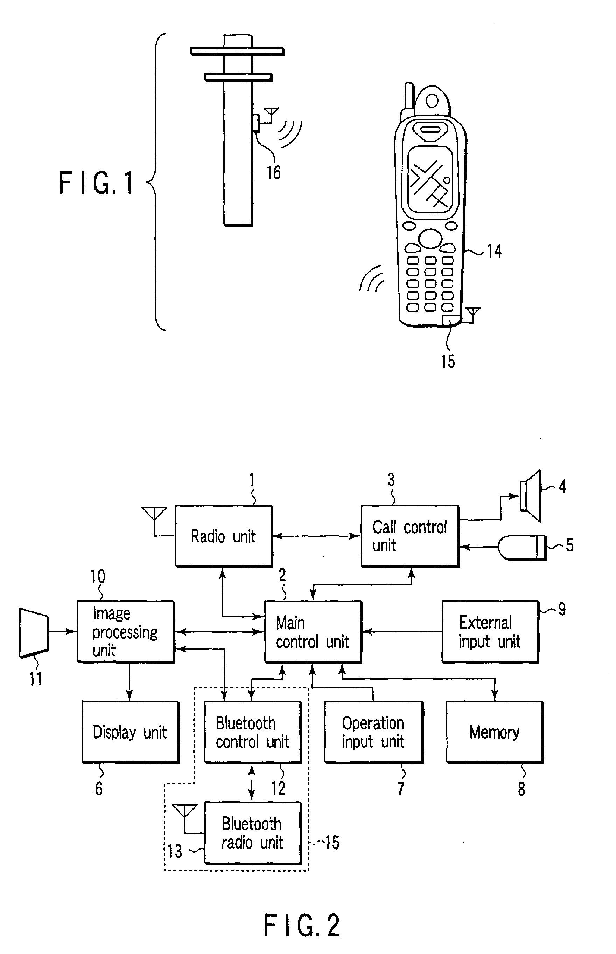

FIGS. 1 - 5 show the communication apparatus and the radio communication system according to the first embodiment. FIG. 1 conceptually shows the radio communication apparatus employing the BT system and according to the first embodiment, and a BT stationary station 16.

The radio communication apparatus shown in FIG. 1, i.e. a mobile phone 14, has a BT unit 15, which is communicable with the BT stationary station 16 and through which radio communication based on the BT system can be realized.

When the radio communication apparatus 14 requires neighborhood information (address, map or shop information), it searches the BT stationary station 16 as an information supply source. When the radio communication apparatus 14 has detected the BT stationary station 16 and shifted to a state in which it can be connected to the station 16, it executes processing for connecting itself to the BT stationary station 16. Specifically, the radio communication apparatus 14 executes establishment processing for establishing a communication link on the basis of a predetermined protocol. As a result, the radio communication apparatus 14 is connected to the BT stationary station 16. After that, the BT stationary station 16 transfers neighborhood information to the radio communication apparatus 14, whereby the user of the apparatus 14 can receive neighborhood information in a visual and/or voice format.

It is desirable that the BT stationary station 16 should be provided in a place that can be easily recognized by the user, such as an old bulletin board for neighboring areas.

FIG. 2 is a block diagram schematically illustrating the internal circuit structure of the radio communication apparatus shown in FIG. 1.

The radio communication apparatus shown in FIG. 2 comprises a BT unit section (12 and 13) for transmitting and receiving radio waves based on the BT system, and a mobile radio communication apparatus section (1 - 11) for transmitting and receiving radio waves based on the mobile radio communication system. In the conventional mobile radio communication system, a so-called mobile phone or PHS, etc. is used as the radio communication apparatus 14. In other words, in the radio communication apparatus of the embodiment of the present invention, the communication mode is switched between the conventional mobile radio communication system mode and BT communication system mode.

The apparatus used as a conventional mobile radio communication system includes a radio unit 1 for transmitting and receiving radio waves to and from a base station of a communication provider. The radio unit 1 is connected to an antenna through which radio waves are transmitted and received.

When the antenna has received radio waves, as a signal, and then the radio unit 1 subjects the received signal to high-frequency amplifying conversion, then frequency conversion, and low-noise amplification. More specifically, the radio unit 1 receives a signal having its frequency designated by a main control unit 2, and subjects the received signal to frequency conversion in which the signal is converted into a intermediate-frequency signal and a base-band signal. Thereafter, the radio unit 1 decodes the converted signal into a digital signal.

The main control unit 2 executes control for establishing a communication channel based on a communications protocol. Upon establishing the communication channel, the main control unit 2 generates an incoming call sound generating signal. A sounder (not shown) outputs the incoming call sound generating signal, thereby informing the user of an incoming call. The incoming call can be informed of by vibrating a vibrator (not shown) or causing an LED to emit light, as well as by emitting an incoming call sound.

A call control unit 3 receives signals from the radio unit 1 over the call channel. If, at this time, the user pushes a button, for example, for establishing a call, incorporated in an operation input unit 7, the call control unit 3 converts a demodulated signal into a speaker signal. This speaker signal is output to a speaker 4, where a speech sound corresponding to the speaker signal is output.

When the apparatus executes signal transmission, a speech sound is input to a microphone 5 incorporated in the radio communication apparatus 14, and radio waves including sound information is transmitted through the antenna. Specifically, when the user has pushed a button on the operation input unit 7 to turn on the radio communication apparatus 14, an ON signal to turn on the radio communication apparatus 14 is generated. The ON signal is input to the main control unit 2, whereby the ON signal is input to a power supply (not shown) to thereby turn on the radio communication apparatus 14. If, at this time, the user operates the operation input unit 7 to input the phone number of a destination, a number signal corresponding to the phone number is generated. The number signal is input to the main control unit 2. After that, a radio control signal based on the number signal is created and output to the radio unit 1. The radio unit 1 encodes the phone number. As a result, a radio signal including the encoded phone number are transmitted through the antenna. The radio signal is received by another radio communication apparatus as the destination. Thus, the radio communication apparatuses are connected. In this state, in the radio communication apparatus as the destination, a speech sound is input to the microphone 5, where it is directed and converted into a sound signal as an electrical signal. The sound signal is input to the call control unit 3, where the input signal is modulated. The call control unit 3 supplies the main control unit 2 with a signal indicating that the sound signal has been input. The main control unit 2 establishes a call channel based on a communication protocol. Over the call channel, the modulated signal is input to the radio unit 1 and transmitted to the nearest base station through the antenna. The radio communication apparatus 14 uses radio waves of a specific frequency bandwidth.

When the apparatus transmits and receives a signal other than a sound signal, e.g. an image data signal, the same processing as above is executed until the main control unit 2 executes a communication control program. Thereafter, the main control unit 2 detects the received signal. If the detected signal is an image data signal, the main control unit 2 establishes an interface for image data. Upon establishing the interface, the main control unit 2 outputs the image data signal to an image processing unit 10. The image processing unit 10 decodes the image data signal. The decoded image data signal is converted into an analog image signal. The converted image signal is output to a display unit 6, where image due to the converted signal is displayed.

When the apparatus transmits image data, a camera 11 picks up an image and converts it into an electrical image signal. An image input terminal may be provided for the radio communication apparatus 14, instead of incorporating the camera 11 in the apparatus 14. In this case, an image input device such as the camera 11 or a video cassette recorder, etc. is connected to the input terminal, and an image signal is input to the image processing unit 10 via the input terminal. The image processing unit 10 encodes the image signal into image data, and outputs the encoded image data to the main control unit 2. Thereafter, the image data is modulated and transmitted via the antenna in the same manner as described above.

The radio communication apparatus 14 also incorporates an external input unit 9 for inputting data from an external device. The external input unit 9 enables transfer of data to and from an external device. For example, character data and/or image data can be exchanged between a personal computer and the radio communication apparatus 14 connected thereto by the external input unit 9. Further, the input terminal can be connected to a video device, thereby obtaining image data therefrom. The radio communication apparatus 14 also incorporates a memory 8 for storing phone numbers, incoming call records, image data and sound data, etc.

In the BT radio unit 13 based on the BT system, radio waves based on the BT system (hereinafter referred to simply as "BT waves") are transmitted to and received from the BT stationary station 16 or another radio communication apparatus 14 compatible with the BT system, via an antenna compatible with the BT system. These radio waves have a specific frequency bandwidth based on the BT system. At the time when signal is received, BT waves are received as a BT-wave-modulated signal and output as a received signal to a BT control unit 12. The BT control unit 12 establishes a BT receiving channel based on the communication protocol. Upon establishing the BT receiving channel, a BT control signal based on the received BT waves is output to the main control unit 2. The main control unit 2, based on the BT control signal, supplies peripheral components with respective command signals corresponding to the components.

When the apparatus receives data, for example, image data, from the BT stationary station 16, the BT radio unit 13 receives a modulated signal including the image data via the antenna. The BT radio unit 13 demodulates the modulated signal into an image signal and outputs the demodulated image signal to the BT control unit 12. The BT control unit 12 supplies the image signal to the image processing unit 10 under the control of the main control unit 2, where the image signal is decoded and converted into an analog image signal for display, and an image corresponding to the image signal is displayed on the display unit 6. Various types of data can be also transmitted as BT waves to the BT stationary station 16 by pushing keys provided on the operation input unit 7.

A more detailed and organized description of the function of each component will be given.

The radio unit 1 shown in FIG. 2 has a function of transmitting and receiving radio waves of a predetermined bandwidth to and from a base station as a provider (not shown). The main control unit 2 controls the communication protocol for the radio unit 1, and the user interface, etc.

The call control unit 3 demodulates a signal to be received over the call channel that is established by controlling the communication protocol by the main control unit 2, and modulates a signal to be transmitted over the call channel. Thus, a call path to another radio communication apparatus as a destination establishes. The speaker 4 converts a sound signal output through the call path established by the call control unit 3, into a speech sound, thereby emitting the reproduced speech sound to the outside of the apparatus. The microphone 5 catches a speech sound and converts it into an electrical sound signal. The sound signal is output to the call path established by the call control unit 3. Thus, the speaker 4 and the microphone 5 constitute a handset for realizing a call to another radio communication apparatus. The display unit 6 displays various types of information under the control of the image processing unit 10. The operation input unit 7 has numerical keys for inputting, for example, phone numbers, and function keys for operating various functions, etc. The memory 8 stores preset additional numbers, data on a telephone book, redial data and received data in the user's absence, etc. The external input unit 9 receives data from an external device. The image processing unit 10 controls the display unit 6 under the control of the main control unit 2, thereby encoding/decoding data. In case of encoding data, a visual signal input by the camera 11 is digitized and encoded by a predetermined encoding method, thereby creating image signal data to be imaged and outputting it to the main control unit 2. On the other hand, in case of decoding data, encoded image data supplied from the main control unit 2 is decoded, thereby creating an analog image signal into which the encoded image data is converted and displaying an image corresponding to the analog image signal on the display unit 6. The camera 11 converts an image into an electrical signal and outputs the electrical signal to the image processing unit 10. The power supply section (not shown) includes a battery such as a lithium ion battery, a charge circuit for charging the battery, and a voltage generating circuit. The voltage generating circuit consists of, for example, a DC/DC converter for generating a predetermined power voltage from the output voltage of the battery. Further, an illuminator (not shown) is provided at a portion, such as the operation input unit 7, to be operated by the user for illuminating the display unit 6 and the operation input unit 7 when operating the apparatus or executing communication. The illuminator is called, for example, a backlight.

The portion of the apparatus, which transmits and receives BT waves, comprises the BT control unit 12 and the BT radio unit 13. The BT radio unit 13 has an antenna for transmitting and receiving BT waves. The BT radio unit 13 transmits and receives radio waves of a predetermined frequency bandwidth to and from another radio communication apparatus provided with a BT unit, or the BT stationary station 16. The BT control unit 12 controls, for example, communication protocol control executed by the BT radio unit 13.

The BT stationary station 16 is connected by a wired line to an exchanger provided at a terminal of a telephone network, and acts as a kind of radio connection apparatus for connecting a plurality of apparatuses. Since the number of access line channels assigned to one BT stationary station 16 is determined, the BT stationary station 16 executes multi-access control for assigning an unoccupied channel to each BT radio unit 13 when a plurality of users of radio communication apparatuses have requested a connection. The main radio equipment of the BT stationary station 16 includes a transmitter, a receiver and an antenna.

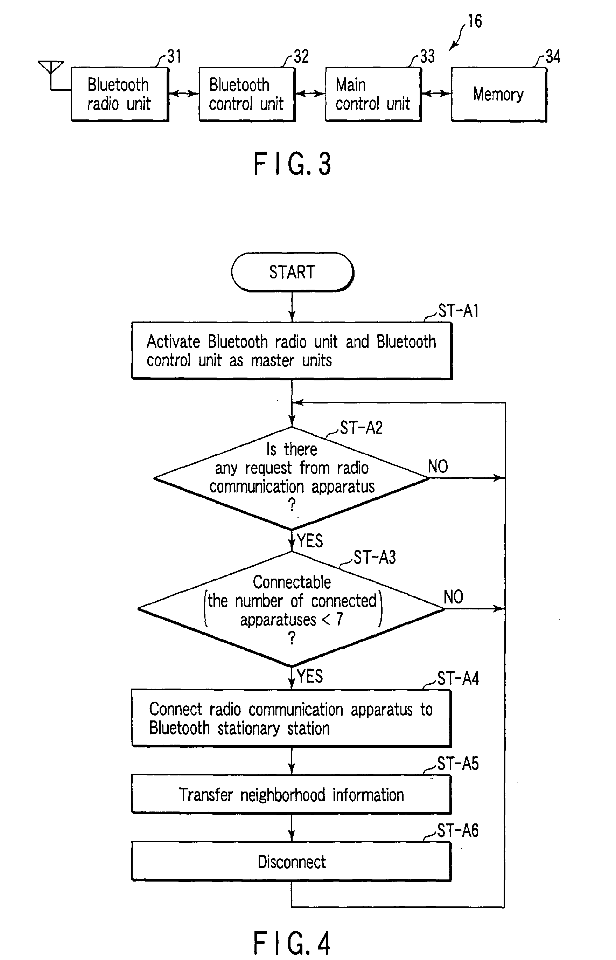

FIG. 3 is a block diagram illustrating the internal electrical structure of the BT stationary station shown in FIG. 1.

FIG. 4 is a flowchart useful in explaining the operation of the BT stationary station of FIG. 3 executed to activate a communication unit in the radio communication apparatus so as to transmit information concerning the neighborhood of the BT stationary station to the radio communication apparatus.

FIG. 3 shows the functions of the BT stationary station 16 shown in FIG. 1. As shown in FIG. 3, the BT stationary station 16 has a BT radio unit 31 for receiving BT waves from the BT unit 15 of the radio communication apparatus 14. The BT radio unit 31 also has a function of transmitting BT waves. The BT radio unit 31 enables the BT stationary station 16 to transmit and receive signals to and from the radio communication apparatus 14 having the BT unit 15. The BT radio unit 31 is connected to an antenna compatible with the BT system, through which BT waves are transmitted and received. The BT radio unit 31 is also connected to a BT control unit 32 for establishing a BT transmitting or receiving channel. The BT control unit 32 is connected to a main control unit 33. The main control unit 33 reads and writes data from and into a memory 34 on the basis of a signal from the BT control unit 32. The memory 34 is connected to the main control unit 33 and stores information concerning the neighborhood and the position, etc. of the BT stationary station 16.

When the BT stationary station 16 receives BT waves, the BT radio unit 31 receives them as a BT wave modulated signal, and outputs the received signal to the BT control unit 32. The BT control unit 32 establishes a BT receiving channel based on the communication protocol. Upon establishing the BT receiving channel, a BT control signal based on the received BT waves is output to the main control unit 33. The main control unit 33 reads and writes predetermined data from and into the memory 34 on the basis of the BT control signal.

When the BT stationary station 16 transmits a signal, data designated by the BT control signal from the BT unit 15 is read from the memory 34 and output to the main control unit 33. To establish a channel for transmitting data from the main control unit 33, the main control unit 33 outputs a command signal to the BT control unit 32, where a BT transmission channel based on the communication protocol is established. The data read from the memory 34 by the BT radio unit 31 is transmitted to the radio communication apparatus 14 having the BT unit 15 that had transmitted the BT control signal.

FIG. 4 illustrates the operation of the BT stationary station 16 shown in FIG. 3. In the BT stationary station 16, at first, the BT radio unit 31 and the BT control unit 32 are activated as master units (step ST-A1). Specifically, when the BT stationary station 16 has been turned on, the BT stationary station 16 acts as a master apparatus, and the radio communication apparatus 14 is connected as a slave apparatus to the BT stationary station 16. In this case, the number of radio communication apparatuses that can be connected to the BT stationary station 16 is set at 7. It is a matter of course that the number of radio communication apparatuses that can be connected to the BT stationary station 16 is not limited to 7 but can be set at any selected value. The number of radio communication apparatuses that can be connected to the BT stationary station 16 may be set at a predetermined value when manufacturing the BT stationary station 16. Alternatively, the main control unit 33 can be designed to be able to set the number of connectable radio communication apparatuses.

It is determined whether or not there is a connection request from a radio communication apparatus 14 to the BT stationary station 16 (step ST-A2). If it is determined that there is no connection request, the determination is repeated at the step ST-A2 until any radio communication apparatus 14 has ordered a connection request. On the other hand, if it is determined that there is a connection request, the program proceeds to the next step ST-A3.

At the step ST-A3, the number of radio communication apparatuses 14 connected to the BT stationary station 16 is confirmed, and it is determined whether or not another radio communication apparatus can be connected to the BT stationary station 16. In the case of FIG. 4, it is determined whether or not the number of connectable radio communication apparatuses is less than 7. If the number is less than 7, it is determined that another radio communication apparatus is connectable, and the program proceeds to the next step ST-A4. If, on the other hand, the number is not less than 7, the program returns to the step ST-A2, where it is determined whether or not there is a connection request.

At the step ST-A4, said another radio communication apparatus is connected by radio to the BT stationary station 16.

At the next step ST-A5, neighborhood information stored in the BT stationary station 16 is transmitted to the radio communication apparatus 14. At this time, position information concerning the position of the BT stationary station 16, for example, may be transmitted as well as the neighborhood information. These information items may be selected on the basis of a command from the radio communication apparatus 14 and transmitted from the BT stationary station 16 to the radio communication apparatus 14.

AT step ST-A6 executed after all information items are transferred at the previous step, radio connection between the BT stationary station 16 and the radio communication apparatus 14 is disconnected. After disconnecting the radio connection, the program returns to the step ST-A2, where it is again determined whether or not there is a connection request.

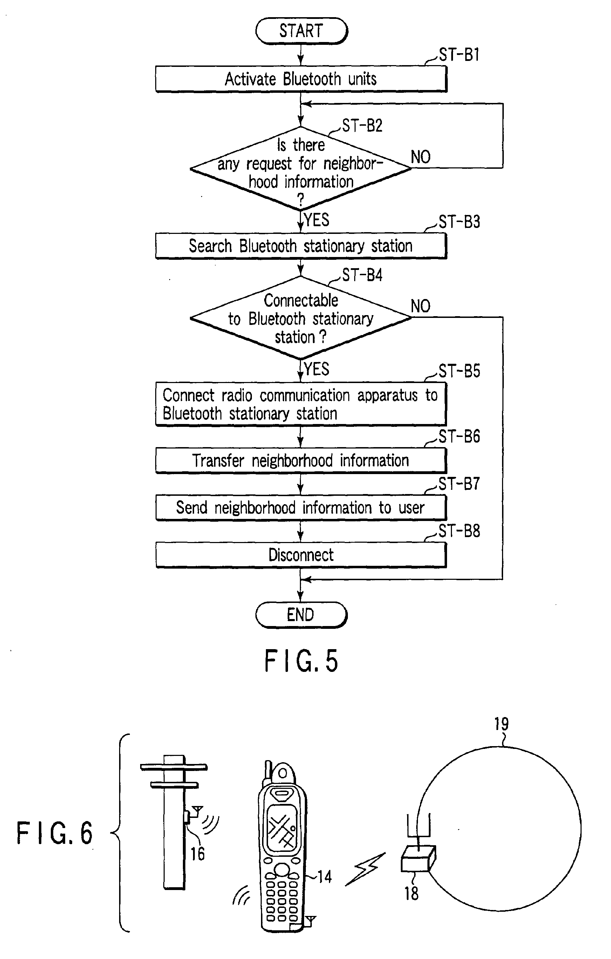

Referring to the flowchart of FIG. 5, a description of the operation of the radio communication apparatus executed to request the reception of neighborhood information will be given.

When radio communication based on the BT system is started, the BT unit 15 is activated (step ST-B1). This operation is realized by pushing its operation button on the operation input unit 7. When the button has been pushed, the main control unit 2 receives a BT activating signal for activating the BT unit 15. Upon receiving the BT activating signal, the main control unit 2 supplies power to the BT unit 15 to activate it.

Subsequently, when the user has pushed a neighborhood information request button on the operation input unit 7, a position information acquiring signal for acquiring position information concerning the neighborhood of the radio communication apparatus 14 is output to the main control unit 2 (step ST-B2). Upon receiving the position information acquiring signal, the main control unit 2 supplies the BT unit 15 with a BT search signal for searching the BT stationary station 16 (step ST-B3). The BT control unit 12 supplies the BT radio unit 13 with a neighborhood information request signal for acquiring neighborhood information. The BT radio unit 13 converts the neighborhood information request signal into radio waves for acquiring neighborhood information, and transmits the radio waves to the BT stationary station via its antenna. When the neighborhood information request waves are transmitted from the radio communication apparatus 14, it is possible that no BT stationary station 16 exists within a communicable radius of approximately 10 m around the radio communication apparatus 14. Furthermore, it is possible that the radio communication apparatus is not permitted to be connected to the BT stationary station 16. In these connection failure cases, the display unit 6 displays, under the control of the image processing unit 10, a message indicative of the connection failure, such as "position information cannot be acquired", thereby terminating the processing (step ST-B4).

If, on the other hand, there is a connectable BT stationary station 16, processing for establishing a communication link is executed on the basis of a predetermined protocol. As a result, the radio communication apparatus 14 is connected to the BT stationary station 16 (step ST-B5). After establishing the connection between the radio communication apparatus 14 and the BT stationary station 16, neighborhood information is transferred from the BT stationary station 16 to the radio communication apparatus 14 (step ST-B6). The neighborhood information includes sound information such as guidance, image information such as a map, and character information such as an address and/or neighborhood shop information, etc. The transferred information is output from the speaker 4 via the call control unit 3, or displayed on the display unit 6 via the image processing unit 10 (step ST-B7).

After transferring neighborhood information, the communication link is broken off to thereby disconnect the BT stationary station 16 from the radio communication apparatus 14 (step ST-B8). Although the BT stationary station 16 in the embodiment is a public one in a town, the invention is not limited to this. The BT stationary station 16 may be located at, for example, the gate of a private residence. In this case, a homepage can be offered for visitors at the residence, using short-range radio waves, for example Bluetooth system. If a neighborhood map is included in the homepage, anyone who needs directions for getting to the destination need not call a resident of the residence. Furthermore, if a BT unit-built-in personal computer is set as the BT stationary station 16, it is possible to access a homepage set thereon. It would be advisable to discriminate such private BT stationary stations 16 from public ones. In this case, private information can be isolated from public information. If private information can be thus provided in the same manner as public information, the number of information providers will increase, with the result that a variety of information can be provided for users through their radio communication apparatuses.

Moreover, the BT stationary station 16 may be installed in each floor of a building in order to guide visitors in the building. In this case, an attendant or a detailed map with an explanation of the building does not have to be provided on each floor. Since the BT system enables accurate detection of the position of the owner of the radio communication apparatus on a certain floor, it also enables accurate detection of the position of, for example, a rest room on the same floor.

In addition, a service can be offered to guide the owner of the radio communication apparatus 14 to the owner's intended destination using image data on the display unit of the apparatus 14 or voice guidance. This BT system service may be combined with a position information service via the mobile phone system. In this case, position information can be acquired even when one of the systems is unusable. Further, where the systems offer different services, the user of the apparatus 14 can use many more services.

Furthermore, information concerning new books in a library may be distributed from the BT stationary station 16. Also, the BT stationary station 16 may be set such that the user can search the books in the library for the book the user want to read.

It is highly possible that no charge is required for a call between the BT stationary station 16 and the radio communication apparatus 14. Since thus, the user can access the BT stationary station 16 with no charge, the BT stationary station 16 is expected to be very frequently used if services as mentioned above are offered therefrom.

Referring now to FIG. 6, a radio communication apparatus and a radio communication system according to a second embodiment of the invention will be described. FIG. 6 schematically illustrates a radio communication apparatus, a BT stationary station, a base station and a mobile radio communication system according to a second embodiment of the invention.

The second embodiment is an application of the first embodiment. Specifically, in the system shown in FIG. 6, the user can acquire updated neighborhood shop information or traffic information through a mobile radio communication system 19.

The radio communication apparatus 14 acquires information concerning its position from the BT stationary station 16, and sends the position information to the mobile radio communication system 19. The mobile radio communication system 19 supplies the radio communication apparatus 14 with neighborhood information such as shop information and/or traffic information, etc. based on the acquired position information. The neighborhood information can be selected by operating the operation input unit 7 of the radio communication apparatus 14. Alternatively, target neighborhood information may be pre-registered in the memory 8. Such registration reduces the number of required operations of buttons on the operation input unit 7, which makes the operation of the operation input unit 7 easier.

In the first embodiment, neighborhood information acquired from BT stationary stations 16 is stored each of BT stationary stations. Accordingly, it may be difficult to manage, as updated information, information such as shop information or traffic information that can be updated from now on. On the other hand, in the second embodiment, since the mobile radio communication system 19 supplies such neighborhood information, the user always can have updated neighborhood information.

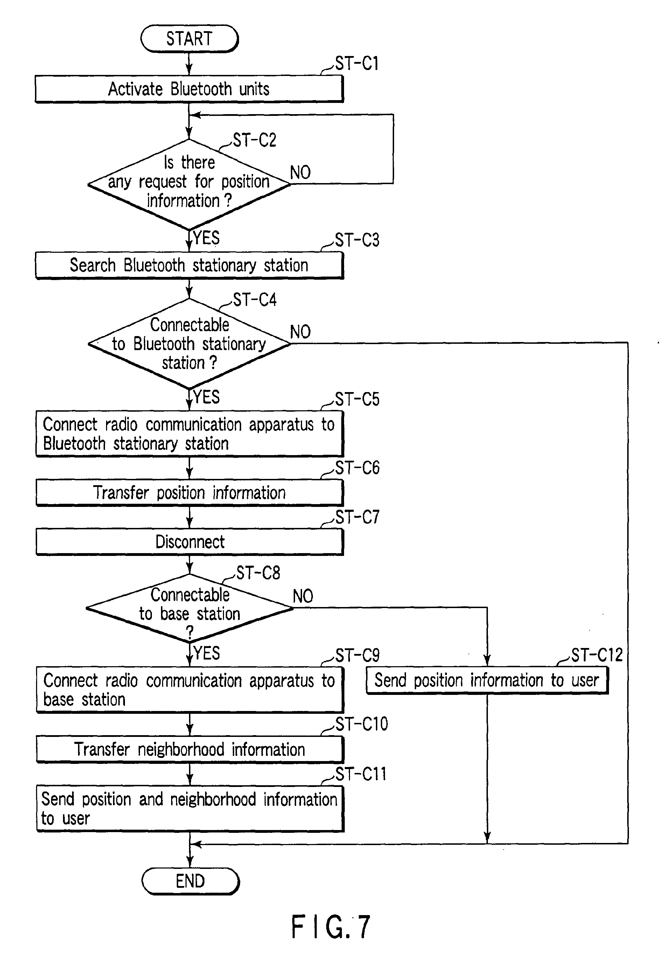

Referring to the flowchart of FIG. 7, a description of the operation of the radio communication apparatus executed to acquire updated neighborhood information will be given. The processing executed at step ST-C1 (for activating the BT unit 15) to step ST-C6 (for transferring position information from the BT stationary station 16 to the radio communication apparatus 14) is similar to that executed at steps ST-B1 to ST-B6 in the first embodiment, and therefore is not described here.

After position information is transferred from the BT stationary station 16 to the radio communication apparatus 14, the radio communication apparatus 14 stores the position information, whereby the apparatus 14 is disconnected from the BT stationary station 16 (step ST-C7). The radio communication apparatus 14 attempts to access a base station 18 (step ST-C8). If it has failed to access the base station 18, only the acquired position information is sent to the user, thereby terminating the processing (step ST-C12).

On the other hand, if the radio communication apparatus 14 can be connected to the base station 18, the apparatus is connected (step ST-C9). Updated information concerning neighborhood stores and/or traffic, etc. corresponding to the position information, which is read from a database installed in the mobile radio communication system 19, is transferred from the base station 18 to the radio communication apparatus 14 (step ST-C10). The neighborhood information includes sound information such as guidance, image information such as a map, and character information such as an address and/or neighborhood shop information, etc. The received information is output from the speaker 4 via the call control unit 3, or displayed on the display unit 6 via the image processing unit 10 (step ST-C11).

Although in the second embodiment, updated information is acquired from a base station, the method of acquiring updated information is not limited to this. For example, the BT stationary station may be connected, by a wired line, to an information center that stores updated information. In this case, updated information is sent via the wired line. In other words, it is not necessary to connect the radio communication apparatus to the base station.

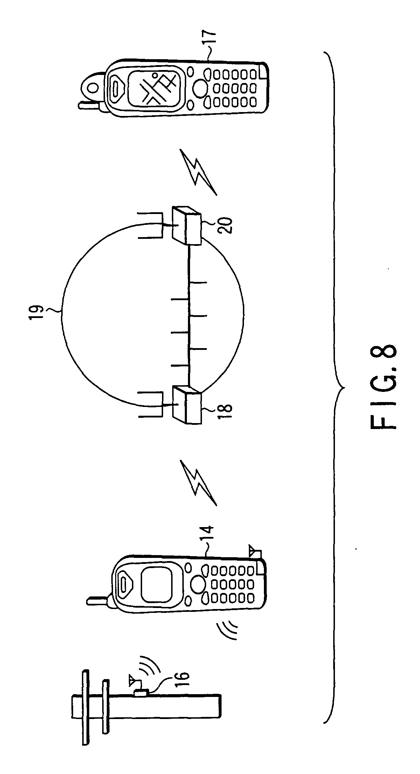

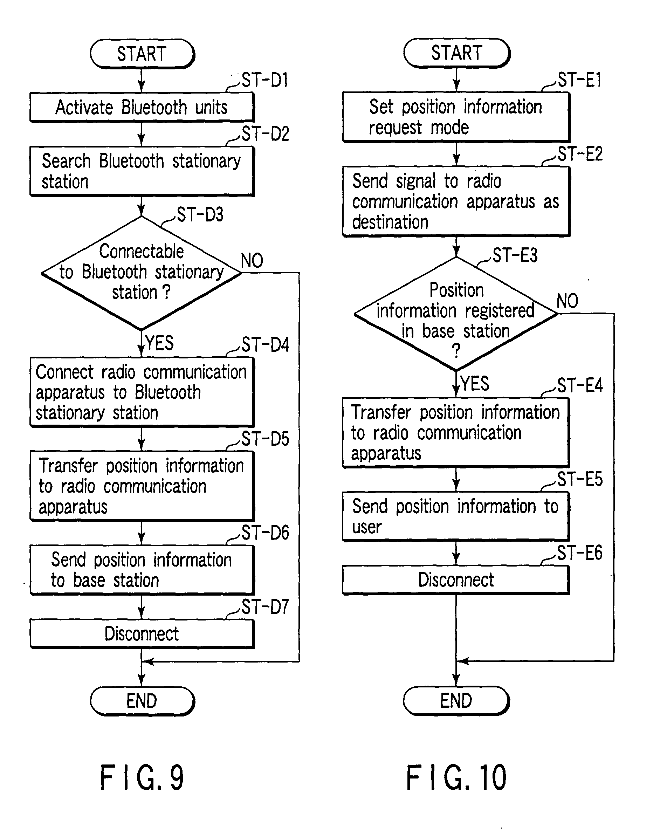

Referring then to FIGS. 8 and 9, a third embodiment of the present invention will be described. FIG. 8 schematically shows two radio communication apparatuses, a BT stationary station, two base stations and a mobile radio communication system employed in the third embodiment of the invention.

In the third embodiment, position information on a radio communication apparatus as a destination can be acquired by making a phone call to the apparatus via a mobile radio communication system 19. When the apparatus acquires the position information, the BT unit of a radio communication apparatus 17, position information of which is to be acquired, is activated thereby to set a position information sending mode for allowing the supply of position information on the radio communication apparatus 17 to an external BT stationary station, base station or radio communication apparatus. In other words, the position information sending mode indicates a mode in which the position information on the radio communication apparatus 17 is allowed to be sent to an external BT stationary station, base station or radio communication apparatus. The radio communication apparatus 14 periodically acquires position information from the BT stationary station 16, thereby sending the acquired position information to the base station 18 of the mobile radio communication system 19. When the radio communication apparatus 17 has made a phone call in a position information acquiring mode to the radio communication apparatus 14, the position information acquired by the radio communication apparatus 14 is transferred to the radio communication apparatus 17 via the mobile radio communication system 19.

Referring to the flowcharts of FIGS. 9 and 10, a description of the operation will be given, which is the radio communication apparatus executed to acquire position information on a radio communication apparatus as a destination by making a phone call thereto via the mobile radio communication system 19.

FIG. 9 is a flowchart for illustrating the processing of the radio communication apparatus 14 as a position information requesting source. In this processing, at first, the user of the radio communication apparatus 14 sets a position information requesting mode in the apparatus 14. When the position information requesting mode has been set, radio communication based on the BT system is executed. Specifically, the main control unit 2 receives a BT activating signal, and supplies power to the BT unit 15 to activate it. Thus, the BT unit 15 is activated (step ST-D1).

Subsequently, the main control unit 2 supplies the BT unit 15 with a BT search signal for searching the BT stationary station 16 (step ST-D2). If no BT stationary station 16 exists within a BT communicable radius of 10 m, or if the BT stationary station 16 does not allow connection of the radio communication apparatus 14 thereto (step ST-D3), the processing is terminated. If, on the other hand, there is a connectable BT stationary station 16, processing for establishing a communication link is executed on the basis of a predetermined protocol. As a result, the radio communication apparatus 14 is connected to the BT stationary station 16 (step ST-D4). After establishing the connection between the radio communication apparatus 14 and the BT stationary station 16, position information on the radio communication apparatus 14 is transferred from the BT stationary station 16 to the radio communication apparatus 14 (step ST-D5). The acquired position information is sent to the base station 18 of the mobile radio communication system 19 (step ST-D6). After the transfer of the position information is finished, the communication link is broken off to disconnect the radio communication apparatus 14 from the BT stationary station 16 (step ST-D7).

The above-described processing is executed periodically, whereby the position information on the radio communication apparatus 14 is sent to the base station 18 of the mobile radio communication system 19. This processing is continued until the user cancels the position information requesting mode.

FIG. 10 illustrates the flow of processing executed by the radio communication apparatus 17 that requests position information. At first, the mode of the radio communication apparatus 17 is set at a position information request mode (step ST-E1). Subsequently, like a usual call, the radio communication apparatus 17 transmits a signal to another apparatus 14 as a destination, in other words, position information of which the user of the apparatus 17 wants to know (step ST-E2). A base station 20 confirms that the signal has been transmitted in the position information request mode, and detects whether or not the base station 18 registers the position information of the radio communication apparatus 14 as the destination (step ST-E3). If the base station 18 does not register the position information of the apparatus 14, a message indicating a failure of search, such as "position information cannot be acquired", is displayed on the display unit 6 of the apparatus 17 via the image processing unit 10, thereby terminating the processing.

On the other hand, if the base station registers the position information, the apparatus 17 transmits the information to the base station 20 via the mobile radio communication system 19. The base station 20 converts the transmitted position information into a data format suitable for the radio communication apparatus 17. After that, the base station 20 transfers the position information to the radio communication apparatus 17 (step ST-E4). The position information includes sound information such as guidance, image information such as a map, and character information such as an address and/or neighborhood shop information, etc. The transferred information is output from the speaker 4 via the call control unit 3, or displayed on the display unit 6 via the image processing unit 10 (step ST-E5). After transferring the position information, the communication link is broken off to thereby disconnect the base station 20 from the radio communication apparatus 17 (step ST-E6).

Although the above-described processing is considered basic one, it is preferable that the base station 18 adds time information to the lastly-received position information, thereby transmitting resultant information to the radio communication apparatus 17. This is because it is possible that the radio communication apparatus 14 will move to a place outside the communication range of the BT stationary station 16.

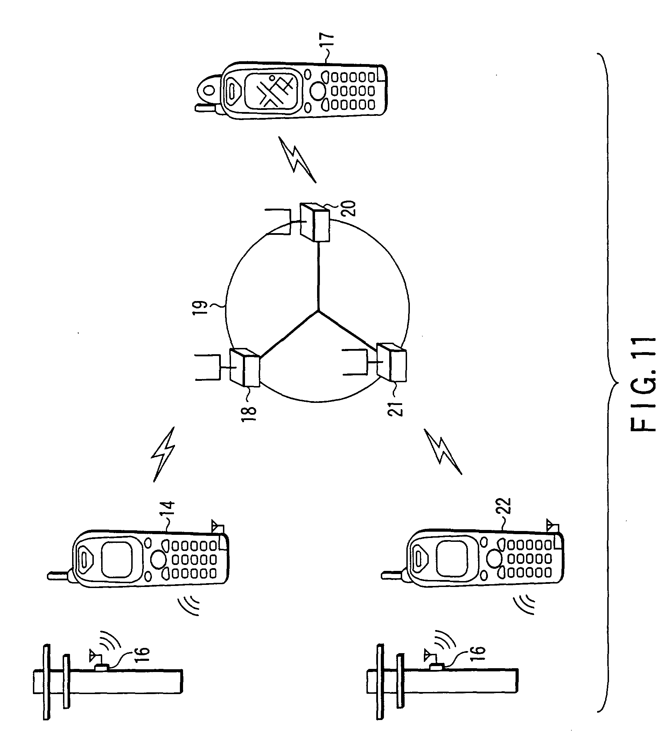

Referring to FIG. 11, a fourth embodiment of the present invention will be described.

FIG. 11 is a schematic view illustrating three radio communication apparatuses, two BT stationary stations, three base stations and a mobile radio communication system according to the fourth embodiment of the invention. This embodiment is an application of the third embodiment, and enables acquisition of position information of a plurality of radio communication apparatuses as destinations. The position information of the plurality of radio communication apparatuses is acquired in the following manner. First, the radio communication apparatus 14 is connected via the mobile radio communication system to the base station 18 belonging to a cell in which the apparatus 14 is located. After the connection, personal identification numbers (telephone numbers, or e-mail addresses, etc.) assigned to radio communication apparatuses (17, 22) as destinations, position information of which the user of the radio communication apparatus 14 wants to know, are transferred to a center (not shown) via the base station 18. The center stores position information of radio communication apparatuses (14, 17 and 22 in FIG. 11) connected to base stations (18, 20 and 21 in FIG. 11) communicable with the center. However, if the user of a radio communication apparatus rejects the registration of its position information, the position information is not registered. If certain position information is not registered in the center, it may be recorded whether or not the user of the apparatus with the position information refuses to inform another person of the position information.

The base station 18 checks whether the position information of the apparatuses (17, 22) as destinations, the position information of which is requested, are registered in the center. If it is registered, the base station 18 acquires the position information of the radio communication apparatuses 17 and 22, converts it into sound information such as guidance, image information such as a map, or character information such as an address and/or neighborhood shop information, etc., and transmits the converted information to the radio communication apparatus 14.

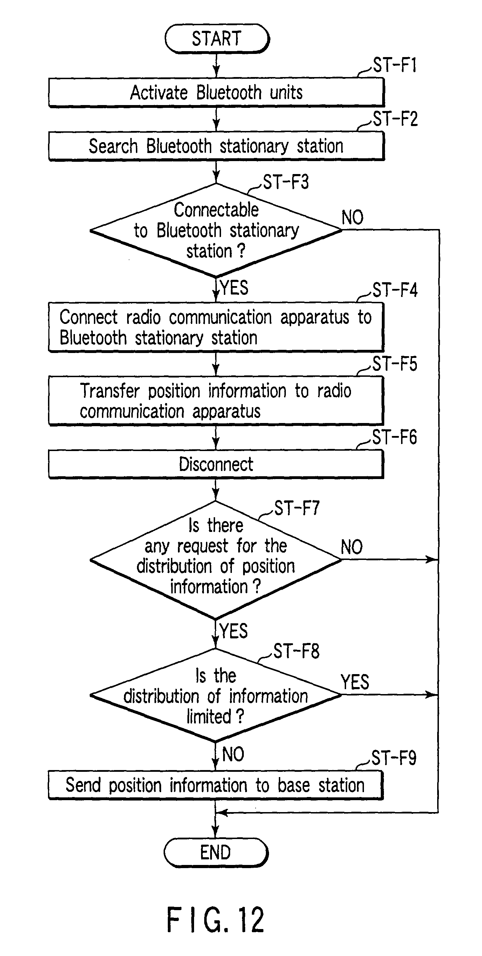

Referring then to FIGS. 8 and 12, a fifth embodiment of the present invention will be described. FIG. 12 is a flowchart useful in explaining the operation of a radio communication apparatus according to the fifth embodiment executed to reject an information request issued by an unspecified radio communication apparatus.

This embodiment is an application of the third embodiment. In the third embodiment, the position information of the radio communication apparatus 14 acquired from the BT stationary station 16 is transmitted to the base station 18 of the mobile radio communication system 19. On the other hand, in the fifth embodiment, the position information of the radio communication apparatus 14 is not transmitted to the base station 18 until the base station 18 receives a request for sending the position information of the apparatus 14 from the radio communication apparatus 17 as a destination. If it receives the request from the radio communication apparatus 17, the radio communication apparatus 14 determines whether or not its position information may be transmitted to the radio communication apparatus 17, and informs the base station 18 of the determination result. As a result, the radio communication apparatus 14 can limit the supply of the position information on the basis of an address stored in the apparatus 14 or any other limitation-setting mode assumed therein (for example, on the basis of a request transmission area). Accordingly, the radio communication apparatus 14 can reject a request for position information issued by, for example, an unspecified radio communication apparatus.

The operation of the radio communication apparatus of this embodiment will be described with reference to the flowchart of FIG. 12. The processing executed at step ST-F1 (for activating the BT unit 15) to step ST-F5 (for transferring position information from the BT stationary station 16 to the radio communication apparatus 14) is similar to that executed at steps ST-C1 to ST-C5 of the third embodiment shown in FIG. 7, and therefore is not described.

After position information is transferred to the radio communication apparatus 14, the radio communication apparatus 14 stores the position information, whereby the apparatus 14 is disconnected from the BT stationary station 16 (step ST-F6). If there is no request for position information from the radio communication apparatus 17 as a destination, the processing is terminated (step ST-F7). If there is a request for position information from the apparatus 17, the radio communication apparatus 14 determines whether or not the radio communication apparatus 17 as a request source is a destination to which the position information is not allowed to be transmitted (step ST-F8). This determination is executed on different bases. For example, the supply of information is limited on the basis of phone numbers stored in the telephone book in the memory, on the basis of a time period set in the radio communication apparatus 14, or on the basis of an area in which the radio communication apparatus 17 as the request source is located. If a radio communication apparatus 17, to which information is allowed to be transmitted, has made a request for information, the radio communication apparatus 14 informs the base station 18 that information is allowed to be transmitted to the apparatus 17. As a result, the base station 18 sends the position information to the radio communication apparatus 17 as the destination via the base station 20 belonging to a cell in which the apparatus 17 is located (step ST-F9).

The present invention is not limited to the above-described embodiments. For example, although in the fifth embodiment, position information is acquired by radio communication based on the BT system, it may be acquired by radio communication based on another system.

In the radio communication apparatus and system of the present invention, when executing short-range radio data communication, the position of the radio communication apparatus can be determined, and information concerning the neighborhood of the radio communication apparatus can be acquired on the basis of the determined position. Furthermore, the position information of a particular radio communication apparatus can be acquired. Also, time information can be acquired as well as the position information, which means that the time information can be detected when, for example, position information concerning another radio communication apparatus as a destination was issued. Since the radio communication apparatus can limit the supply of position information, the user of the apparatus can limit the supply of the position information voluntarily. In addition, the user can limit the supply of the position information on the basis of a period in time set by the user, or on the basis of address data stored in the radio communication apparatus. The above-mentioned information can be electronically rewritten. This means that information can be rewritten easily and updated information can be provided at low cost.

## Claims

1. A radio communication apparatus including radio communication means (1, 2) for executing radio communication with a base station of a mobile radio communication system,
**characterized by** comprising communication means (12, 13) capable of executing short-range radio data communication with a stationary station,
comprising position information acquisition means (2, 12, 13) for acquiring position information from the stationary station, and
wherein said communication means (12, 13) acquires position information indicating a position of said radio communication apparatus by requesting the position information from the stationary station, using said position information acquisition means (2, 12, 13).

2. The radio communication apparatus according to claim 1, **characterized in that** said position information acquisition means (2, 12, 13) includes stationary station information acquiring means (2, 12, 13, ST-B7) for requesting, from the stationary station, stationary station relevant information related to the position of the radio communication apparatus, thereby acquiring the stationary station relevant information from the stationary station.

3. The radio communication apparatus according to claim 1, **characterized by** further comprising base station information acquiring means (1, 2, ST-C12) for requesting, from the base station, base station relevant information related to the position of said radio communication apparatus, thereby acquiring the base station relevant information from the base station.

4. The radio communication apparatus according to claim 1, **characterized by** further comprising position information transmitting means (1, 2, ST-D6) for transmitting the position information acquired from the stationary station, to the mobile radio communication system.

5. The radio communication apparatus according to claim 1, **characterized by** further comprising position information receiving means (1, 2, ST-E5) for receiving position information concerning another radio communication apparatus via the mobile radio communication system.

6. The radio communication apparatus according to claim 2, **characterized by** further comprising stationary station information transmitting means (1, 2, ST-C11) for transmitting the stationary station relevant information acquired from the stationary station, to the mobile radio communication system.

7. The radio communication apparatus according to claim 6, **characterized in that** said stationary station information transmitting means (1, 2, ST-C11) transmits the stationary station relevant information to the mobile radio communication system at regular intervals.

8. The radio communication apparatus according to claim 1, **characterized by** further comprising information supply limiting means (2, 7, 8, ST-F8) operating when receiving, from the base station, a request for supply of position information on said radio communication apparatus issued by another radio communication apparatus, thereby limiting the supply of the position information to said another radio communication apparatus on the basis of a prescribed criterion.

9. The radio communication apparatus according to claim 1, **characterized by** further comprising information supply limiting means (2, 7, 8, ST-F8) operating when receiving, from the base station, a request for supply of position information on the radio communication apparatus, thereby limiting the supply of the position information on the basis of a time the base station received the request.

10. The radio communication apparatus according to claim 1, **characterized by** further comprising information supply limiting means (2, 7, 8, ST-F8) operating when receiving, from the base station, a request for supply of position information on the radio communication apparatus issued by another radio communication apparatus, thereby limiting the supply of the position information to said another radio communication apparatus on the basis of a telephone number assigned to said another radio communication apparatus.

11. The radio communication apparatus according to claim 1, **characterized by** further comprising information supply limiting means (2, 7, 8, ST-F8) operating when receiving, from the base station, a request for supply of position information on said radio communication apparatus issued by another radio communication apparatus, thereby limiting the supply of the position information to said another radio communication apparatus on the basis of a location of said another radio communication apparatus.

12. A stationary station for executing short-range radio data communication with a radio communication apparatus that can perform radio communication with a base station of a mobile radio communication system, **characterized by** comprising:
connection means (31, 32) for connecting said stationary station to the radio communication apparatus by radio;
memory means (34) for storing information related to a position of said stationary station; and
transmission means (31, 32) for transmitting information stored in said memory means (34) to the radio communication apparatus, over the radio connection by said connection means (31, 32).

13. The stationary station according to claim 12, **characterized in that** the information related to the position of said stationary station is information concerning a neighborhood of said stationary station.

14. A radio communication system including radio communication means (1, 2) for executing radio communication with a base station, and communication means (12, 13) capable of executing short-range radio data communication with a stationary station, **characterized by** comprising:
transmission means (1, 2, 8) for acquiring position information on said radio communication apparatus from the stationary station, and transmitting the position information to the mobile radio communication system via the base station.

15. The radio communication system according to claim 14, **characterized in that** said transmission means (1, 2, 8) transmits data on a time when the apparatus is located in a position that is determined based on the position information.

16. The radio communication system according to claim 14, **characterized by** further comprising information providing means (16) for providing information related to a position of the radio communication apparatus, on the basis of the position information on the radio communication apparatus.
